# EUROPEAN PATENT APPLICATION

(11) **EP 2 884 331 A1**
(43) Date of publication of application: **17.06.2015**
(21) Application number: 13196563.4
(22) Date of filing: 10.12.2013
(51) Int. Cl.: G02F 1/065

(54) **Electro-optic modulator and method of fabricating same**

(71) Applicant: Institute of Solid State Physics, University of Latvia, 1063 Riga (LV)
(72) Inventor: Nitiss, Edgars, LV-1013 Riga (LV); Rutkis, Martins, LV-2118 Salaspils pagasts (LV); Svilans, Mikelis, LV-1079 Riga (LV)
(74) Representative: Koppel, Mart Enn

(57) **Abstract**

According to the present invention, an electro-optical polymer optical modulator device structure is defined for integration on silicon-on-insulator (SOI) substrate. Electrodes are provided on the SOI for inducing an electric field in a waveguide comprising an electro-optical polymer to modulate the refractive index when in normal operation, thereby modulating the phase of an optical wave propagating within the waveguide. The electrodes can also be used for poling the electro-optical polymer in the waveguide.

Another aspect of the present invention relates to a method for fabricating the electro-optic polymer optical modulator device using process steps which are compatible with CMOS electronic integrated circuit fabrication on SOI.

## Description

### Technical Field

The present invention relates to optical waveguide devices and, more specifically, to optical modulator devices, which implement an electro-optical polymer in a waveguide on a silicon-on-insulator (SOI) substrate.

### Background Art

Fiber-optic telecommunications systems implement semiconductor diode laser sources for converting an electrical signal into an optical signal, which is coupled into an optical fiber for transmission to an optical receiver. The optical output amplitude of the laser source may be directly modulated by modulating its electrical injection current. However due to the internal device transients, the optical frequency of the laser source deviates from its steady-state or continuous wave (CW) value, a process often known as frequency chirp.

At higher modulation rates or in long-haul optical links of fiber optic communications systems, the frequency chirp can produce an unacceptable level of degradation in the optical signal due to the chromatic dispersion in optical fiber. The laser source optical output response time to the injection current modulation may also be limited by intrinsic physical parameters in the diode laser.

To overcome these two problems the diode laser source is often driven with a constant injection current in CW mode, while the amplitude of its output optical signal is modulated by a separate optical device referred to as an external modulator. Such an arrangement is suitable for generating an optical signal with a very high modulation rate which can be transmitted over extended distances through optical fiber or similar optical waveguides.

External modulators comprising optical waveguides fabricated on a suitable substrate such as a silicon wafer or glass plate are particularly interesting for commercial application because of their compact size, good efficiency and high frequency response. Modulation of an optical signal by an electrical signal can be accomplished by guiding an input optical wave through a section of a waveguide comprising an electro-optic (EO) material. The refractive index of the EO material can be changed by applying an external electric field with a consequent change in the propagation velocity of the optical wave propagating through the waveguide.

The change in propagation velocity thus produced may be exploited for electrically modulating the phase of the optical wave and the device is referred to as a phase modulator. Amplitude modulation of the optical wave may be accomplished by using the phase modulator in an interferometric structure such as a Mach-Zehnder interferometer, which is well-known in the art.

Optical waveguides typically consist of at least two essential regions: a waveguide core with an axis that determines the path of a guided optical wave; and a waveguide cladding axially surrounding the core and having a lower index of refraction than the core. Since one portion of the optical wave optical wave propagates within the core region and another portion propagates within the cladding region, an EO material in either one or both of the regions can be used for modulating the phase of the optical wave.

Particularly advantageous EO materials include certain classes of polymers due to their high electro-optic coefficient, ease of manufacture, transparency at commonly used wavelengths (780 nm for short haul, 1300nm, 1550nm for long haul telecommunications), and low cost. However, to enhance the electro-optic properties the molecules within the material need to be aligned in a suitable orientation using a process called poling. To pole the electro-optic material, an electric field with an appropriate direction is applied while the temperature is cycled sufficiently high for the molecules to assume the desired orientation, after which the temperature is lowered to normal operating levels.

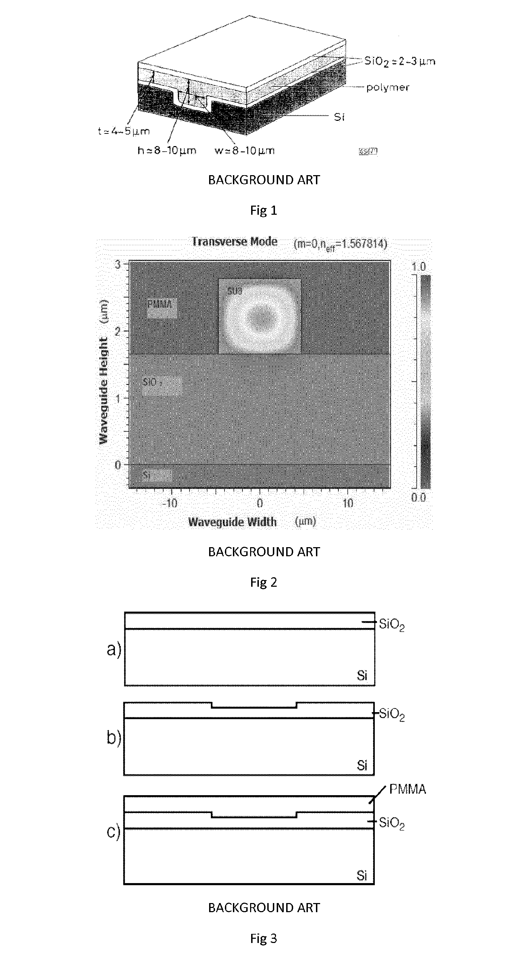

Passive optical waveguides consisting of a polymer core and a silicon dioxide cladding on a silicon substrate are shown in the background art Fig. 1 (Fischbeck, 1996). Optical guiding normal to the substrate surface is achieved by choosing a polymer core whose refractive index is higher than the silica cladding. Optical guiding laterally in the plane of the substrate, on the other hand, is achieved by an inverted rib structure with a region of increased thickness of polymer constituting the waveguide core. This structure, however cannot be used as a phase modulator as there are no electrodes included for inducing an electric field in the electro-optically active polymer.

A different structure is shown in Fig. 2 (Esinenco et al., 2005), in which the core comprises SU-8 polymer with a polymethylmethacrylate (PMMA)cladding on three sides and silica (SiO₂) on the underside of the core on a silicon wafer. Although this structure is provided with an electrode, its purpose is to heat the waveguide in order to change its refractive index through the thermo-optic effect. In comparison with the electro-optic effect, the thermo-optic effect typically has a substantially longer response time, which is governed by the thermal conductivity of the materials used. In addition, as polymers tend to become chemically and mechanically unstable at elevated temperatures, this can have a negative impact on its usable lifetime.

Alternatively PMMA can be coated over a trench in silica to produce an inverted rib structure with PMMA core and cladding of silica on the underside and air on the top, as in Fig. 3 (Cristea et al., 2006).

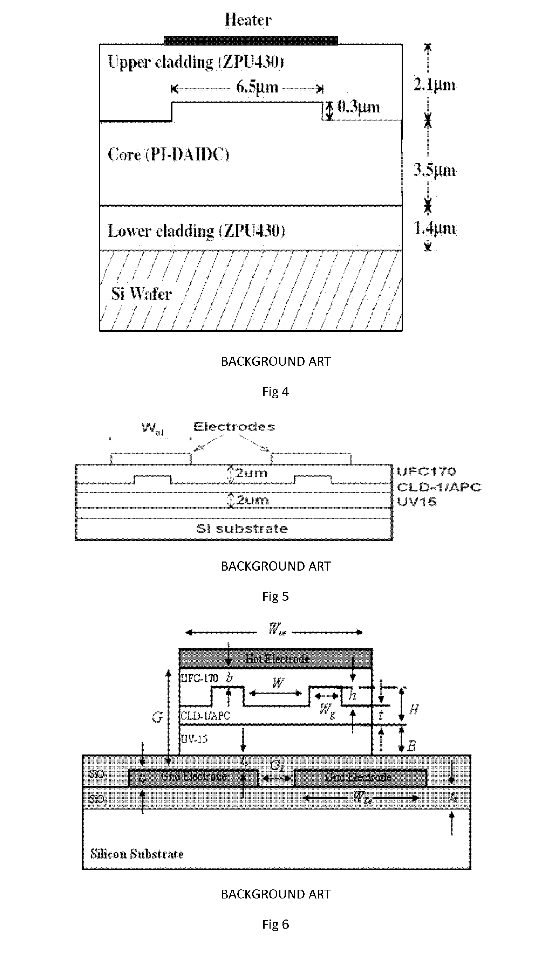

Another approach comprising a rib waveguide structure on silicon but without silica includes a PI-DAIDC core with an upper and lower cladding of ZPU430, as shown in Fig. 4 (Park 1994). However, both of these phase modulator structures are based on the thermo-optic effect and therefore posses the same disadvantages as described above.

An example of an electro-optic phase modulator, shown in Fig. 5 (Dellolio et al., 2007) uses a guest-host polymer material consisting of a highly nonlinear chromophore guest phenyltraene-bridged chromophore (CLD-1) doped into amorphous polycarbonate host (ACP) for a pair of rib waveguide cores, which are sandwiched between a lower cladding of UV curable epoxy (UV15) and an upper cladding of a polymer that does not contain any solvent and so does not penetrate into core layer (UFC170). This structure requires the silicon substrate to be first coated with a metal layer which acts as a common electrode under the polymer layers, while control electrodes deposited on the upper surface are used to apply a vertical electric field to the polymer layers of each waveguide.

An alternative arrangement of electrodes deposited on a silica layer on a silicon substrate appears in Fig. 6 (Gorman et al., 2009). In this example a ground electrode is located under each waveguide ridge, covered with an additional silica layer, on top of which the polymer structure is placed. The structure is poled with a vertical electric field of opposite polarity induced by voltages of opposite sign applied to the ground electrodes, so that the sign of the electro-optic effect acts differentially in each waveguide ridge when an electrical voltage is applied to the top electrode.

For efficient and large-scale production of electro-optic modulators it would be advantageous to integrate them with electronic control circuits comprising active elements such as transistors in CMOS technology. There is a rising interest in combining such electronic circuitry with optical or photonic circuits to reap the benefits of compact size, high speed and low cost in optical switching and modulation for telecommunications.

Silicon-on-insulator (SOI) is a preferred substrate material in the electronics industry, finding widespread application in high-speed sub-micron integrated circuit fabrication due to its high level of processing maturity. However, the exemplary background art electro-optic structures described above do not exhibit the required compatibility properties for integration with electronic circuits.

This invention defines a structure and method for fabricating a polymer electro-optic modulator that is compatible with CMOS and similar technologies on SOI.

### Summary of invention

According to the present invention, an electro-optical polymer optical modulator device structure is defined for integration on silicon-on-insulator (SOI) substrate. Electrodes are provided on the SOI for inducing an electric field in a waveguide comprising an electro-optical polymer to modulate the refractive index when in normal operation, thereby modulating the phase of an optical wave propagating within the waveguide. The electrodes can also be used for poling the electro-optical polymer in the waveguide.

Another aspect of the present invention relates to a method for fabricating the electro-optic polymer optical modulator device using process steps which are compatible with CMOS electronic integrated circuit fabrication on SOI.

### Brief description of drawings

The invention will be described in greater detail with reference to the accompanying drawings which represent preferred embodiments thereof, wherein:
FIG. 1 (BACKGROUND ART) is an isometric view of a polymer waveguide with SiO₂ cladding embedded in silicon;
FIG. 2 (BACKGROUND ART) is a cross-sectional view of polymer waveguides on SiO₂ with PMMA cladding on silicon;
FIG. 3 (BACKGROUND ART) is a cross-sectional view of a polymer waveguide embedded in SiO₂ cladding on silicon;
FIG. 4 (BACKGROUND ART) is a cross-sectional view of a pair of thermo-optic polymer waveguides with polymer cladding on silicon with heater;
FIG. 5 (BACKGROUND ART) is a cross-sectional view of a pair of electro-optic polymer waveguides with polymer cladding on silicon with metal electrodes;
FIG. 6 (BACKGROUND ART) is a cross-sectional view of a pair of electro-optic polymer waveguides with polymer cladding on SiO₂ on silicon with metal electrodes;
FIG. 7 is an isometric view of an electro-optic polymer phase modulator with silicon electrodes on SOI according to the present invention;
FIG. 8 is an isometric view of an electro-optic polymer phase modulator with metal electrodes contacting silicon electrodes on SOI;
FIGs. 9a to 9l are cross-sectional views illustrating the processing steps of method 1 according to the present invention for fabricating an electro-optic polymer phase modulator with metal contacts on silicon SOI electrodes;
FIGs. 10a to Fig10i are cross-sectional views illustrating the processing steps of method 2 according to the present invention for fabricating an electro-optic polymer phase modulator with metal contacts on silicon SOI electrodes; and
FIGs. 11a to 11j are cross-sectional views illustrating the processing steps of method 3 according to the present invention for fabricating a simplified electro-optic polymer phase modulator with metal electrodes on SiO₂.
Fig. 12 is a schematic top view of an array waveguide incorporating phase shifting sections according to the present invention.

### Description of embodiments

Embodiments of the present invention provide benefits arising from the fact that multiple discrete optical devices can be integrated on a single substrate, with the discrete optical devices optically coupled by waveguides to form more complex photonic circuits. Such optical devices advantageously reduce the need for individual packaging and interconnecting of discrete optical device components, leading to cost-savings in fabrication and improved performance due to shorter interconnect distances and lower optical losses.

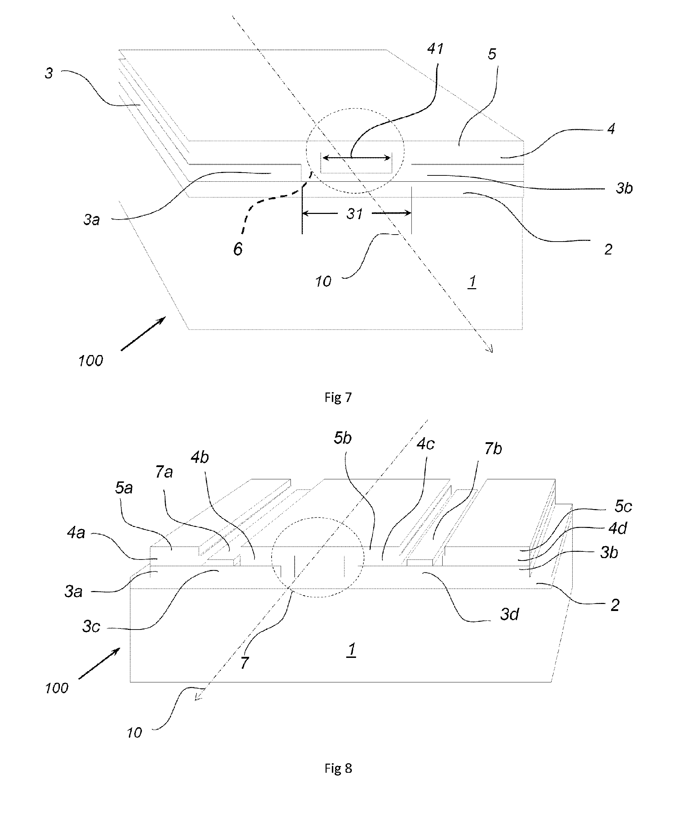

The structure of one embodiment of a polymer optical phase modulator **100** is illustrated by an isometric view of one end in Figure 7. A wafer substrate **1** such as silicon substrate supports an electrically insulating buffer layer a buried oxide layer **2** on an upper surface, which in turn is covered with a monocrystalline silicon layer (so called silicon-on-insulator, or SOI) layer **3**.

An optical waveguide with an optical axis **10** is defined on the wafer substrate **1** by a trench **31** of width **wₒ** preferably formed in an etching step, such as reactive ion etching (RIE) through the SOI layer **3.** The trench **31** separates the silicon layer into two electrically isolated SOI regions **3a** and **3b,** which form a part of the electrodes for operating the optical phase modulator.

The SOI layer **3** may be natively doped to a level that provides sufficient electrical conductivity for use as an electrode, generally a doping level in the range 10¹⁸ cm⁻¹ to 10²⁰ cm⁻¹ being adequate. Alternatively, for high resistivity SOI with doping as low as 10¹⁵ cm⁻¹, the conductivity may be increased by a process step comprising ion implantation of dopant species such as beryllium, arsenic, phosphorus and similar, followed by a high-temperature anneal.

A cladding for the optical waveguide comprises a conformal insulating layer such as silicon dioxide coating **4** formed over the SOI regions **3a, 3b** and the buried oxide layer **2** by a suitable technique such as thermal surface oxidation, chemical vapor deposition or similar. The conformal silicon dioxide coating **4** has a nominally uniform thickness, which tends to follow the contours of the stripe opening **31,** thereby forming a channel **41.** The silicon dioxide coating **4** must be have sufficient thickness for wavelengths of interest in order to avoid optical coupling losses to the silicon substrate **1** and the SOI layer **3** due to their substantially higher refractive index, typically in the range of 3.5. Additional optical losses can be incurred at shorter wavelengths where the absorption coefficient of silicon becomes non-negligible.

The optical waveguide core comprises an electro-optically active polymer **5** applied spin-coated onto the wafer substrate **1** by a suitable method such as spin-coating, partially or totally filling the channel **41** and optionally covering the areas of the silicon dioxide coating **4** that lie outside the channel **41.** The channel **41** defining the waveguide core may be straight or bent in the plane of the wafer substrate **1,** however the bend radius should not exceed a minimum value which is determined by the dimensions and refractive index difference of the polymer **5** and the silicon dioxide coating **4.**

The electro-optically active polymer **5** is selected based on several physical properties, including but not confined to electro-optic activity, thermal stability, adhesion to silicon and its oxides, optical absorption and others. It may comprise a mixture of polymers having electro-optic activity, where an organic dye is attached as a side chain to the polymer. Examples include copolymers comprising polymethylmethacrylate (PMMA), hydroxyethylmethacrylate (HEMA), and one or more chromophores. Examples of appropriate chromophores include organic dyes, such as azo dyes like N-Ethyl-N-(2-hydroxyethyl)-4-(4-nitrophenylazo)aniline. Additional examples of polymers that are directly electro-optic include mixtures of PMMA and chromophores, such as 4,4'-oxynitro stilbene or 4-dimethylamino-4'-nitrostilbene, attached as side-chains to PMMA. Other suitable materials include host-guest systems such as the polysulphonate (PSU) - DMABI system.

The refractive index of the silicon dioxide coating **4** has a value from approximately 1.44 to 1.47 over the wavelength range 400nm to 1800nm. To form a waveguide with appropriate optical confinement, the polymer **5** requires an index of refraction which is higher than that of the silicon dioxide coating **4,** preferably between 1.6 to 1.7 or even higher. The difference in refractive index provides lateral and normal optical confinement to an optical wave propagating along the optical waveguide.

In operation the polymer optical phase modulator **100** is required to produce a predetermined phase shift in an optical signal propagating over a length of the optical waveguide. A guided wave propagating in the optical waveguide has a mode with an effective index and an associated electric field, which extends from the waveguide core into the cladding, as shown by the dashed line circle **6.** The predetermined phase shift, typically in the range between pi/2 and pi radians, is achieved through modifying the effective index of the guided wave.

Since a significant portion of the mode field **6** propagates within the waveguide core comprising the polymer **5,** an electric field can be applied to change its refractive index and consequently produce the desired change of the effective index. The electric field is generated by applying an electric potential between the two separate electrically isolated conducting regions **3a** and **3b.**

In a second embodiment, illustrated in Fig. 8, the two separate electrically isolated SOI regions **3a** and **3b** can be exposed at areas **3c, 3d,** respectively to provide access to electrical connections. As shown in Fig. 8, metal electrodes **7a, 7b** may be deposited on the exposed areas **3c, 3d** in order to reduce series resistance of the modulator **100,** which is important for high-speed operation.

The electrodes comprising either the SOI regions **3a** and **3b** or metal electrodes **7a, 7b** are required for not only the operation of the optical phase modulator **100,** but also for the initial poling of the polymer **5** with an electric field at an elevated temperature to achieve its electro-optic activity.

The polymer optical phase modulator **100** can be fabricated by various methods. The methods described here are exemplary and can be adapted by a person skilled in the art for a particular set of materials or modulator application.

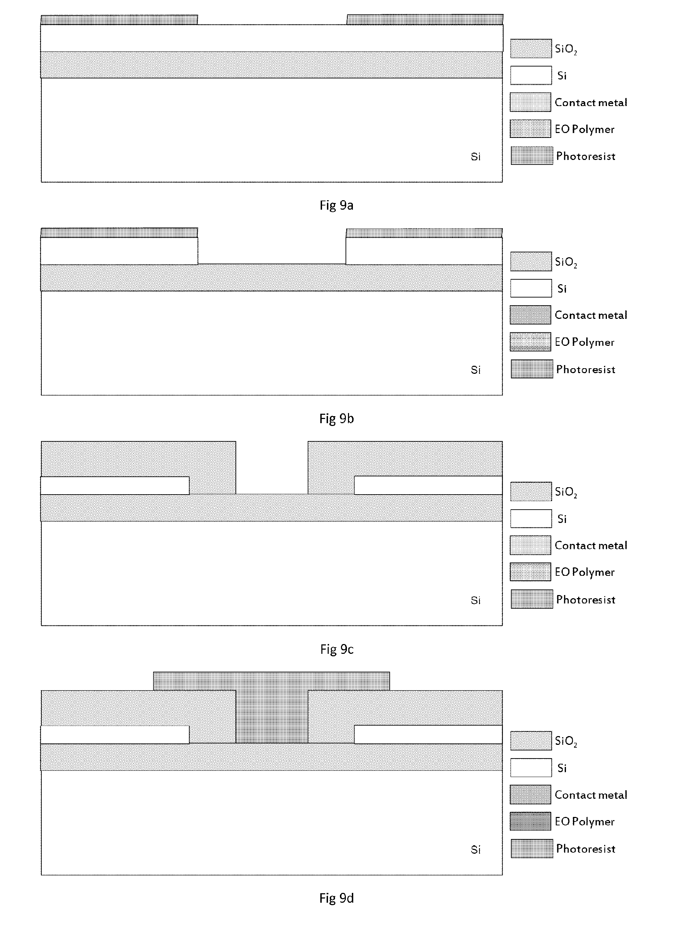

The process steps of a first method for fabricating the polymer optical phase modulator **100** is illustrated in Figs. 9a to 9l showing device cross-sections in which the vertical scale is exaggerated for greater clarity.

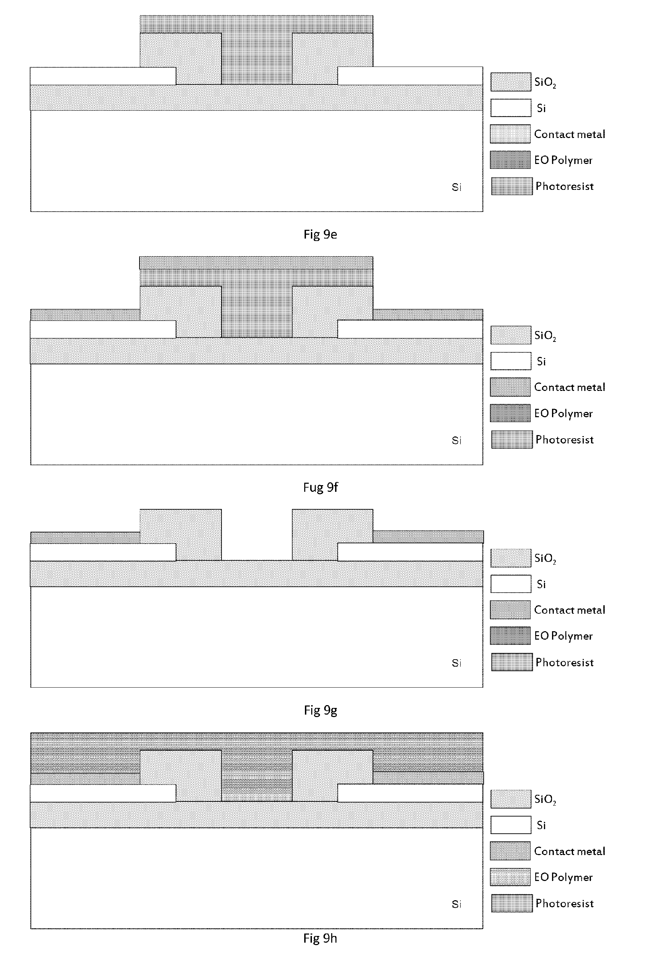

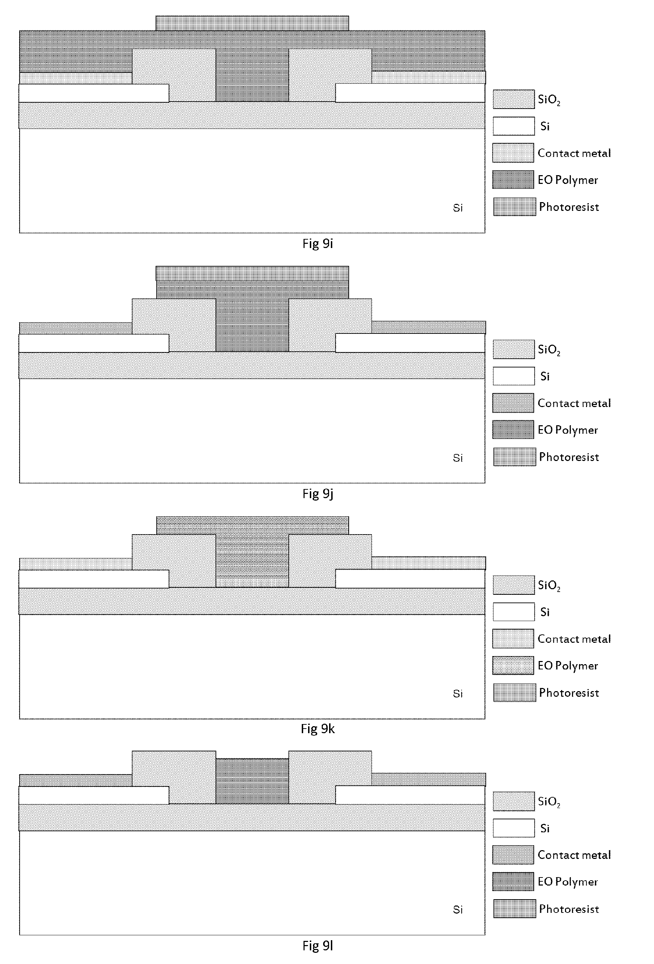

The process steps comprise:
a) Coating the surface of a SOI wafer with photoresist, performing a photolithographic exposure to open a region in the photoresist (Fig. 9a);
b) Performing masked etching of the silicon layer down to the buried oxide layer using a suitable etching process such as wet chemical etching, reactive ion etching (RIE) or similar, and removing the photoresist after the completion of the etching (Fig. 9b);
c) Forming a substantially conformal layer of silicon oxide on the surface of the wafer using thermal oxidation of silicon, chemical vapour deposition (CVD) of silicon oxide (Fig. 9c);
d) Coating the surface of a SOI wafer with photoresist and performing a photolithographic exposure to open a regions in the photoresist for the deposition of metal electrodes (Fig. 9d). This step may optionally be omitted if metal electrodes are not required depending on the intended applications of the polymer optical phase modulator **100;**
e) Etching a via through the silicon oxide to expose the underlying silicon using a suitable etching process such as wet chemical etching, RIE or similar, and removing the photoresist after the completion of the etching (Fig. 9e);
f) Depositing one or more layers of metal to form an electrical contact electrodes with the silicon (Fig. 9f);
g) Removing excess metal from areas not to be contacted using lift-off techniques (Fig. 9g);
h) Coating the wafer with electro-optically active polymer (Fig. 9h);
i) Coating the surface of a SOI wafer with photoresist and performing a photolithographic exposure to open a regions in the photoresist for exposing the deposited metal electrodes (Fig. 9i);
j) Performing masked etching of the electro-optically active polymer to expose the deposited metal electrodes (Fig. 9j);
k) Optionally removing the photoresist if necessary (Fig. 9k); and
l) Optionally cutting back the electro-optically active polymer by etching, laser ablation or other suitable processes to reduce its vertical dimension if necessary (Fig. 9l).

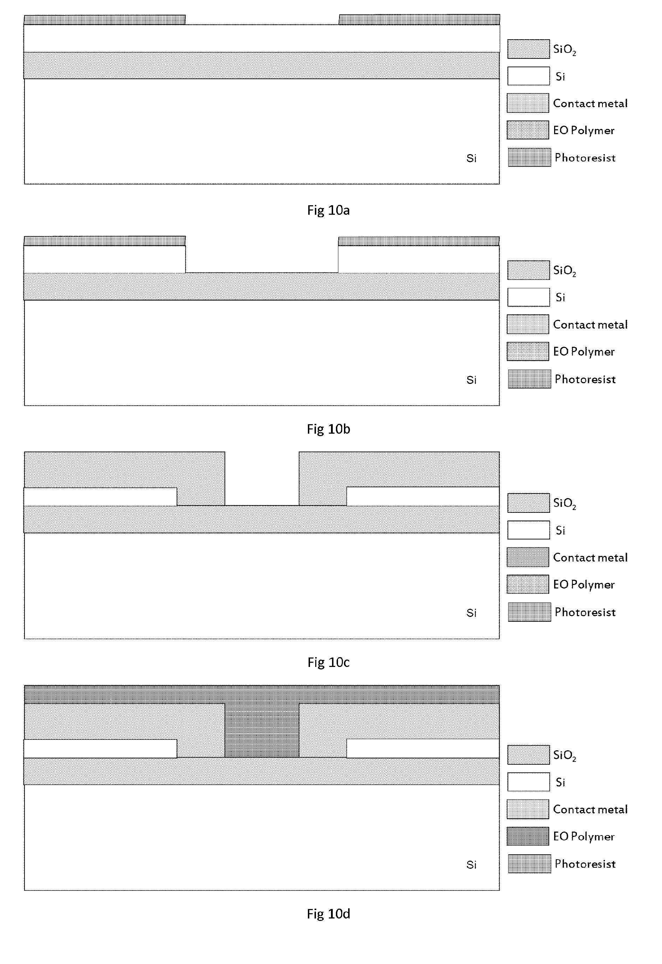

The process steps of a second method for fabricating the polymer optical phase modulator **100** is illustrated in Figs. 10a to 10i showing device cross-sections in which the vertical scale has been exaggerated for greater clarity.

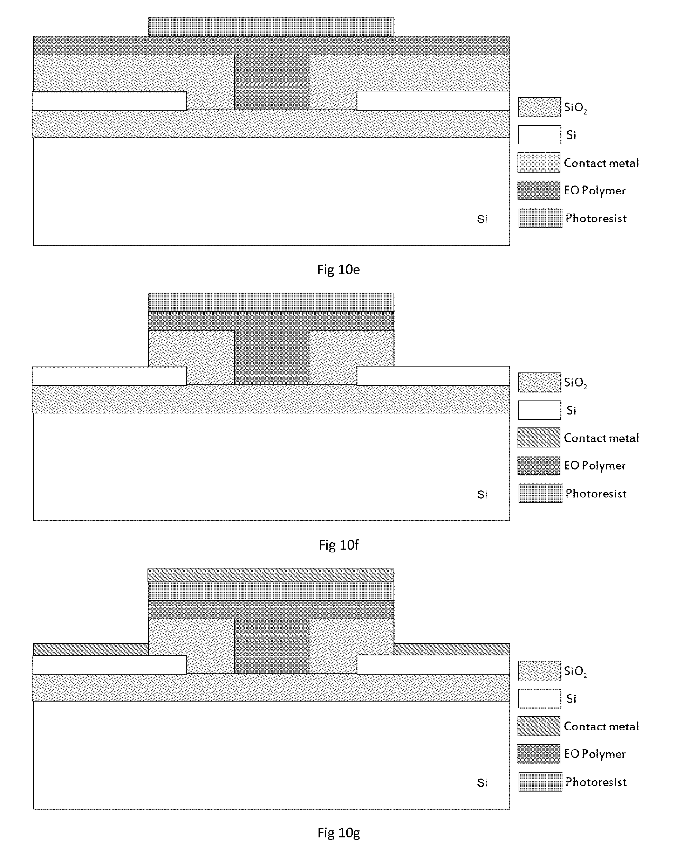

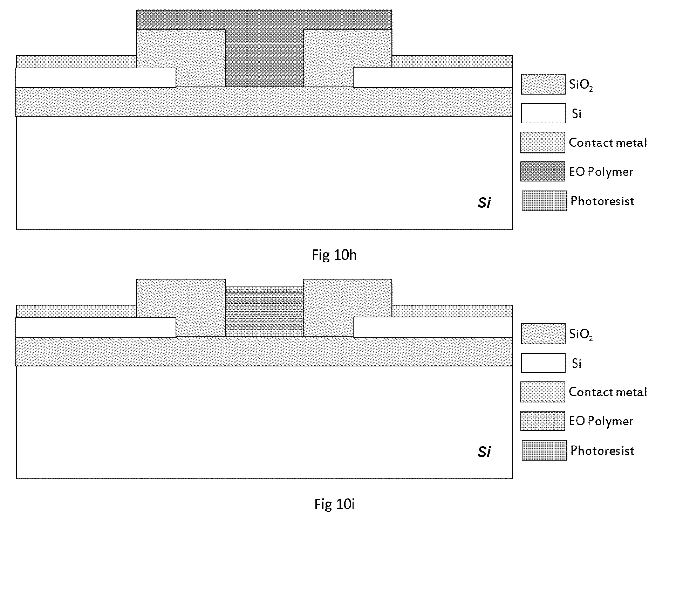

The process steps comprise:
a) coating the surface of a SOI wafer with photoresist, performing a photolithographic exposure to open a region in the photoresist (Fig. 10a);
b) performing masked etching of the silicon layer down to the buried oxide layer using a suitable etching process such as wet chemical etching, reactive ion etching (RIE) or similar, and removing the photoresist after the completion of the etching (Fig. 10b);
c) forming a substantially conformal layer of silicon oxide on the surface of the wafer using thermal oxidation of silicon, chemical vapour deposition (CVD) of silicon oxide (Fig. 10c);
d) coating the wafer with electro-optically active polymer (Fig. 10d);
e) coating the surface with photoresist for contact metalization (Fig. 10e);
f) etching of polymer and silicon oxide (Fig 10f);
g) depositing one or more layers of metal to form an electrical contact electrodes (Fig 10g);
h) removing excess metal from areas not to be contacted using lift-off techniques (Fig. 10h); and
i) cutting back the electro-optic polymer (Fig 10i).

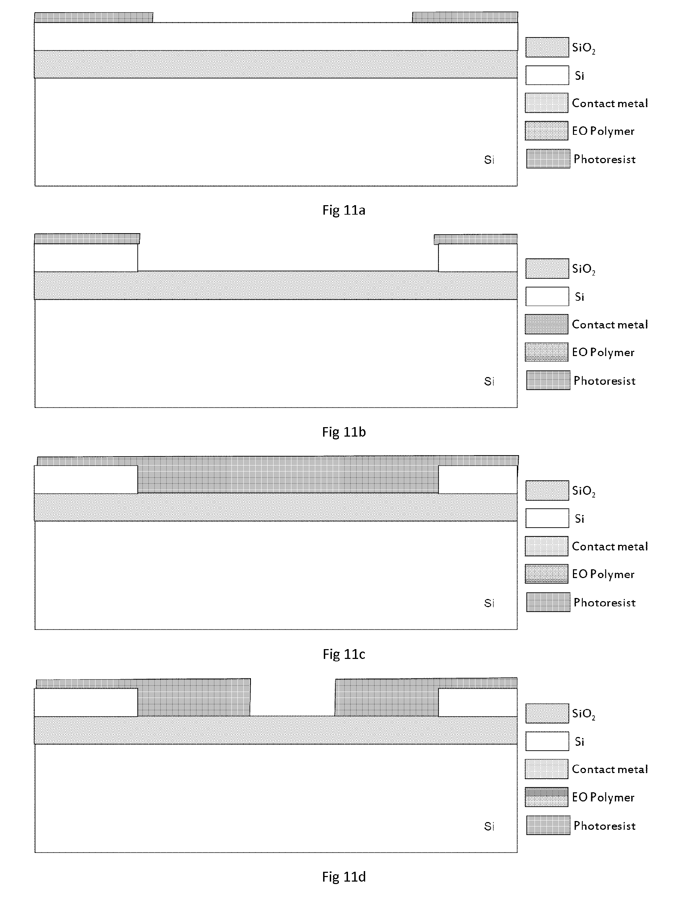

The process steps of a third method for fabricating the polymer optical phase modulator **100** is illustrated in Figs. 11(a) to (j) showing device cross-sections in which the vertical scale has been exaggerated for greater clarity.

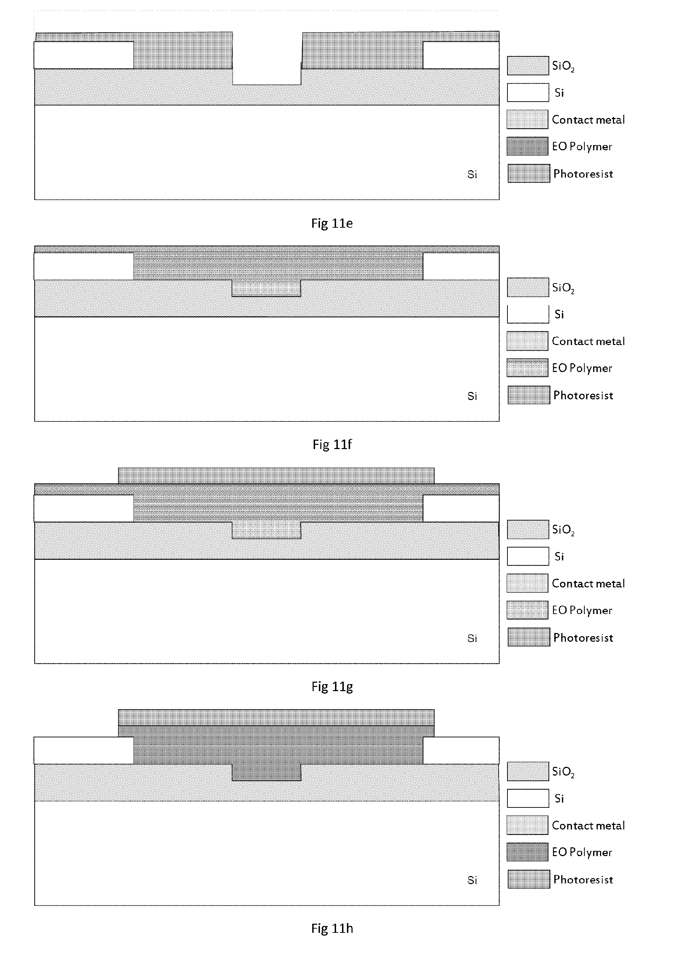

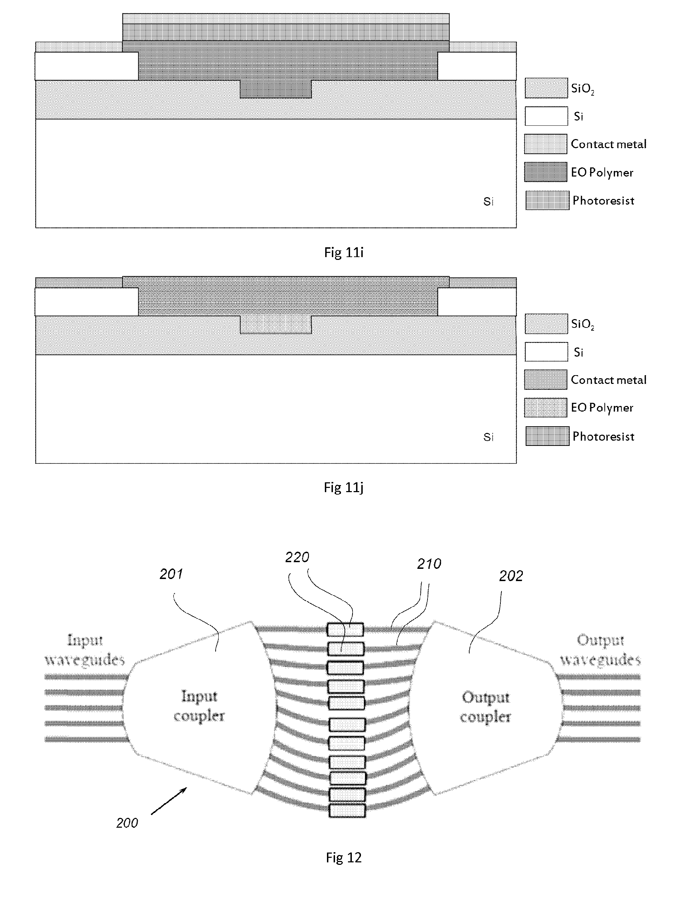

The process steps comprise:
a) coating the surface of a SOI wafer with photoresist, performing a photolithographic exposure to open a region in the photoresist (Fig. 11 a);
b) performing masked etching of the silicon layer down to the buried oxide layer using a suitable etching process such as wet chemical etching, reactive ion etching (RIE) or similar, and removing the photoresist after the completion of the etching (Fig. 11 b);
c) coating the wafer with photoresist (Fig 11c);
d) photolithography for trench in silicon oxide layer (Fig 11d);
e) performing silicon oxide etching (Fig 11e);
f) coating the wafer with electro-optic polymer (Fig 11f);
g) performing photolithography for contact metallization (Fig 11 g);
h) etching of openings in electro-optic polymer to expose silicon (Fig 11h);
i) depositing the contact metalization (Fig 11i), and
j) removing excess metal from areas not to be contacted using lift-off techniques (Fig. 11j).

The device embodiments and methods described above may be applied to various situations where the phase of an optical wave needs to be adjusted either on a slow time scale or modulated at high rates for the conversion of an electronic signal to an optical signal for transmission over waveguides such as single mode fiber.

An example of the first case is often required where fabrication tolerances produce undesired distortions of the optical phase in finished devices, which require trimming, tuning or otherwise adjusting after fabrication has been completed. One example is an array waveguide (AWG) **200** shown in Fig. 12, which consists of an array of waveguides **210** of different lengths to produce a series of different phase shifts between an input coupler **201** and an output coupler **202.** The AWGs perform filtering functions in dense wavelength division multiplex (DWDM) telecommunication systems for separating signal channels of different wavelengths into output ports. Due to process inaccuracies, the spectral filter function is often shifted so that it no longer corresponds to the used optical frequency grid, generally defined by ITU specifications.

The polymer optical phase modulator defined in this disclosure **220** may be incorporated into one or more of the waveguides **210** of the AWG **200** so that the AWG may be tuned to the required optical frequency grid by the application of appropriate electrical bias signals to the polymer optical phase modulator **220.**

### Citation list

Fischbeck, G., R. Moosburger, M. Topper, and K. Petermann. "Design concept for singlemode polymer waveguides." Electronics Letters 32, no. 3 (1996): 212-213.
Esinenco, D., S. D. Psoma, M. Kusko, A. Schneider, and R. Muller. "SU-8 micro-biosensor based on Mach-Zehnder interferometer." Rev. Adv. Mater. Sci 10, no. 4 (2005): 295-299.
Cristea, Dana, Paula Obreja, Mihai Kusko, Elena Manea, and Roxana Rebigan. "Polymer micromachining for micro-and nanophotonics." Materials Science and Engineering: C 26, no. 5 (2006): 1049-1055.
Park, Suntak, Jung Jin Ju, Jung Yun Do, Seung Koo Park, and Myung-Hyun Lee. "Multi-channel electro-optic polymer modulator based on a novel side-chain polymer." Journal of Nonlinear Optical Physics & Materials 13, no. 03n04 (2004): 329-334.
Dell' Olio, Francesco, Vittorio MN Passaro, and Francesco De Leonardis. "Simulation of a high speed interferometer optical modulator in polymer materials." Journal of Computational Electronics 6, no. 1-3 (2007): 297-300.
Gorman, T., S. Haxha, and J. J. Ju. "Ultra-high-speed deeply etched electrooptic polymer modulator with profiled cross section." Lightwave Technology, Journal of 27, no. 1 (2009): 68-76.; Gorman, T., S. Haxha, and J. J. Ju. "Novel ultra-high-speed deeply etched polymer electro-optic modulator." In SPIE Europe Optics+ Optoelectronics, pp. 73540E-73540E. International Society for Optics and Photonics, 2009.

## Claims

1. An electro-optic device comprising:
a silicon substrate supporting an electrically insulating buffer layer on an upper surface thereof;
a monocrystalline or polycrystalline silicon layer supported on the buffer layer, divided into at least two electrically isolated regions by a trench;
an optical waveguide in the trench comprising a conformal insulating layer covering the trench and the at least two electrically isolated regions, and an electro-optic layer supported by the conformal insulating layer;
a set of electrically conductive lateral electrodes comprising at least one signal electrode and at least one ground electrode having an inter-electrode gap therebetween, formed above the buffer layer, which are positioned to receive an electrical signal for inducing an electrical field in the optical waveguide.

2. A device as in claim 1, wherein said buffer layer comprises silicon dioxide.

3. A device as in claims 1 to 2, wherein at least one of said electrically conductive electrodes is metal electrode.

4. A device as in claims 1 to 3, wherein said electro-optic material is a electro-optically active polymer

5. A device as in claim 4, wherein said electro-optically active polymer comprises an organic dye attached as a side chain to the polymer.

6. A device as in claim 4, wherein said electro-optically active polymer comprises copolymers comprising polymethylmethacrylate (PMMA), hydroxyethylmethacrylate (HEMA), and one or more chromophores, wherein said chromophores include organic dyes, such as azo dyes like N-Ethyl-N-(2-hydroxyethyl)-4-(4-nitrophenylazo)aniline.

7. A device as in claims 1 to 3, whereis said electro-optically active polymer comprise mixtures of PMMA and chromophores, such as 4,4'-oxynitro stilbene or 4-dimethylamino-4'-nitrostilbene, attached as side-chains to PMMA.

8. A device as in claim 4, wherein said electro-optic material includes host-guest systems such as the polysulphonate (PSU) - DMABI system.

9. A device as in claim 1, wherein said electro-optic device comprises silicon-on-insulator (SOI) as said silicon substrate.

10. A device as in claim 1, comprising a silicon wafer coated with an oxide.

11. A method of fabricating an electro-optic device comprising the steps of:
providing a silicon-on-insulator (SOI) wafer comprising a silicon substrate, a buried oxide layer on a first surface thereof, and a monocrystalline silicon layer contiguous with the buried oxide layer;
etching a trench through the monocrystalline silicon layer to subdivide same in at least two electrically isolated regions;
forming a conformal electrically insulating layer over the trench and the electrically isolated regions;
opening up the electrically isolated regions and depositing electrodes on said electrically isolated regions; and
coating the wafer with electro-optically active polymer.

12. A method of fabricating an electro-optic device comprising the steps of:
coating the surface of a SOI wafer with photoresist, performing a photolithographic exposure to open a region in the photoresist;
performing masked etching of the silicon layer down to the buried oxide layer using a suitable etching process such as wet chemical etching, reactive ion etching (RIE) or similar, and removing the photoresist after the completion of the etching;
forming a substantially conformal layer of silicon oxide on the surface of the wafer using thermal oxidation of silicon, chemical vapour deposition (CVD) of silicon oxide;
coating the surface of a SOI wafer with photoresist and performing a photolithographic exposure to open a regions in the photoresist for the deposition of metal electrodes;
etching a via through the silicon oxide to expose the underlying silicon using a suitable etching process such as wet chemical etching, RIE or similar, and
removing the photoresist after the completion of the etching;
depositing one or more layers of metal to form an electrical contact electrodes with the silicon;
removing excess metal from areas not to be contacted using lift-off techniques;
coating the wafer with electro-optically active polymer;
coating the surface of a SOI wafer with photoresist and performing a photolithographic exposure to open a regions in the photoresist for exposing the deposited metal electrodes;
performing masked etching of the electro-optically active polymer to expose the deposited metal electrodes.

13. A method as in claim 11, further comprising removing the photoresist and cutting back the electro-optically active polymer by etching, laser ablation or other suitable processes to reduce its vertical dimension.

14. A method of fabricating an electro-optic device comprising the steps of:coating the surface of a SOI wafer with photoresist, performing a photolithographic exposure to open a region in the photoresist; performing masked etching of the silicon layer down to the buried oxide layer using a suitable etching process such as wet chemical etching, reactive ion etching (RIE) or similar, and removing the photoresist after the completion of the etching, forming a substantially conformal layer of silicon oxide on the surface of the wafer using thermal oxidation of silicon, chemical vapour deposition (CVD) of silicon oxide; coating the wafer with electro-optically active polymer, coating the surface with photoresist for contact metalization, etching of polymer and silicon oxide, depositing one or more layers of metal to form an electrical contact electrodes, removing excess metal from areas not to be contacted using lift-off techniques, and cutting back the electro-optic polymer.

15. A method of fabricating an electro-optic device comprising the steps of:coating the surface of a silicon wafer with a layer of silicon oxide; coating the silicon oxide layer with photoresist, performing a photolithographic exposure to open a region in the photoresist, performing masked etching of a trench in the silicon oxide layer using a suitable etching process such as wet chemical etching, reactive ion etching (RIE) or similar, and removing the photoresist after the completion of the etching;, coating the wafer with electro-optic polymer, performing photolithography for contact metallization, etching of openings in electro-optic polymer to expose the silicon oxide layer, depositing the contact metalization, and removing excess metal from areas not to be contacted using lift-off techniques
